# EUROPEAN PATENT APPLICATION

(11) **EP 3 998 774 A1**
(43) Date of publication of application: **18.05.2022**
(21) Application number: 21194630.6
(22) Date of filing: 27.07.2016
(51) Int. Cl.: H04N 19/117, H04N 19/14, H04N 19/157, H04N 19/176, H04N 19/82, H04N 19/86

(54) **MOVING IMAGE PROCESSING APPARATUS, PROCESSING METHOD, AND COMPUTER-READABLE STORAGE MEDIUM**

(30) Priority: 30.09.2015 JP 2015194343
(62) Divisional of application: 16850842.2
(71) Applicant: KDDI CORPORATION, Shinjuku-ku Tokyo 163-8003 (JP)
(72) Inventor: KAWAMURA, Kei, Fujimino-shi 356-8502 (JP); NAITO, Sei, Fujimino-shi 356-8502 (JP)
(74) Representative: Pitchford, James Edward

(57) **Abstract**

Provided is a moving image processing apparatus. A moving image processing apparatus includes: detection means for detecting a boundary of blocks; determination means for determining a strength of the boundary detected by the detection means; and deciding means for deciding whether or not a filter is to be applied to the boundary based on the strength of the boundary determined by the determination means. The determination means uses a size of a transformation block to determine the strength of the boundary.

## Description

### TECHNICAL FIELD

The present invention relates to a moving image processing apparatus, a processing method, and a computer-readable storage medium.

### BACKGROUND ART

PTL 1 discloses a moving image encoding apparatus and decoding apparatus that use intra prediction (intra-frame prediction)/inter prediction (inter-frame prediction), residual transformation, entropy encoding, and in-loop filters. Fig. 6 is a diagram showing a configuration of an encoding apparatus disclosed in PTL 1. Note that encoding is performed in units of blocks, which are any of multiple different sizes obtained by dividing frames.

First, the input image data is input to an inter prediction unit 15 and an intra prediction unit 16. Note that image data of a previous frame is input to the intra prediction unit 15 from a frame buffer 17, and image data of an already-processed block of the same frame as the processing target is input to the intra prediction unit 16 from an addition unit 14. The inter prediction unit 15 calculates a prediction block for the processing target block being processed through inter-frame prediction, based on the previous frame. The intra prediction unit 16 outputs a prediction block for the processing target block based on another block of the same frame as the processing target block. Also, depending on whether inter-frame prediction or intra-frame prediction is to be applied to the processing target block, one of the outputs of the inter prediction unit 15 and the intra prediction unit 16 is output to a subtraction unit 10.

The subtraction unit 10 outputs an error (residual) signal indicating an error between the image of the image processing target block and a predicted image output by the inter prediction unit 15 or the intra prediction unit 16. A transformation/quantization unit 11 outputs a level value by performing orthogonal transformation and quantization on the error signal. The encoding unit 12 generates a bit stream by performing entropy encoding on the level value and side information (not shown). Note that side information is information that is needed to re-configure the pixel values used in the decoding apparatus, and includes information such as the encoding mode, which indicates which of intra prediction or inter prediction was used, the quantization parameters, and the block size.

An inverse quantization/inverse transformation unit 13 generates an error signal by performing processing that is the inverse of that of the transformation/quantization unit 11. The addition unit 14 generates the processing target block by adding the error signal output by the inverse quantization/inverse transformation unit 13 and the predicted image output by the inter prediction unit 15 or the intra prediction unit 16, and outputs the generated processing target block to the intra prediction unit 16 and an in-loop filter 18. Upon receiving all of the blocks of one frame, the in-loop filter 18 generates a locally-decoded image corresponding to the frame and outputs the generated image to a frame buffer 17. The locally-decoded image is used for inter-frame prediction in the inter prediction unit 15.

Note that NPTL 1 discloses that deblocking processing and sample adaptive offset processing are performed by the in-loop filter 18. Deblocking processing is processing for reducing distortion that occurs at the boundary portion of a block in a frame. Accordingly, image quality deterioration is prevented from propagating in inter-frame prediction. Note that the sample adaptive offset processing is processing for adding/subtracting an offset value to/from a pixel value.

Fig. 7 is a diagram showing a configuration of a decoding apparatus disclosed in PTL 1. The bit stream generated by the encoding apparatus is subjected to entropy encoding by a decoding unit 20 and a level value and side information are extracted. An inverse quantization/inverse transformation unit 21 generates an error signal based on the level value. Depending on whether the block corresponding to the error signal was obtained through inter-frame prediction or intra-frame prediction, an addition unit 22 adds the error signal to the prediction image for the block output by an inter prediction unit 23 or an intra prediction unit 24. In this manner, the addition unit 22 regenerates the block. The block regenerated by the addition unit 22 is output to the intra prediction unit 24 for intra-frame prediction. Also, the block regenerated by the addition unit 22 is output to an in-loop filter 26 as well. Upon receiving all of the blocks of one frame, the in-loop filter 26 generates a locally-decoded image corresponding to the frame and outputs the generated image to a frame buffer 25. The locally-decoded image is output as output image data while being used for inter-frame prediction in the inter prediction unit 23.

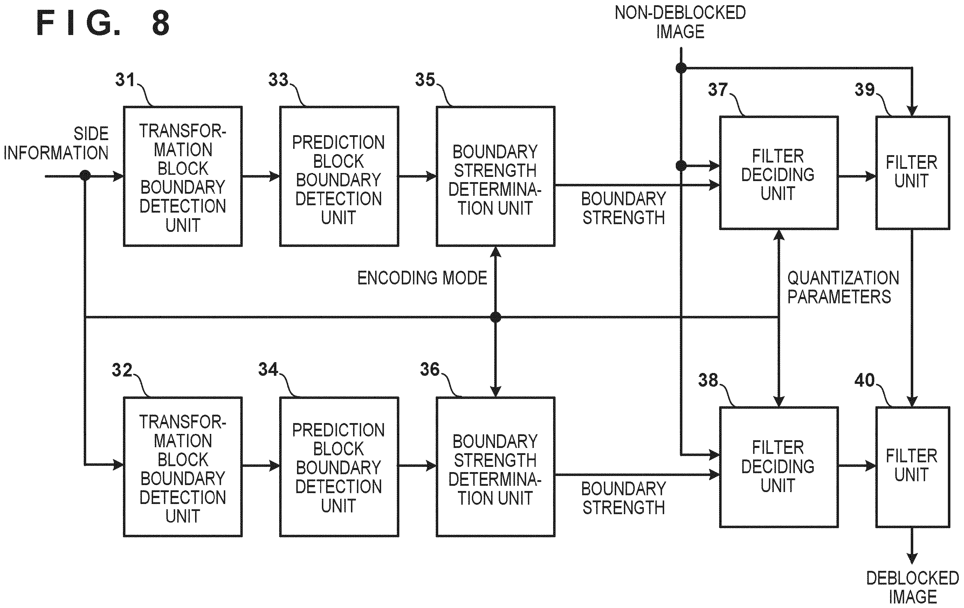

FIG. 8 shows a configuration of a deblocking filter provided in the in-loop filters 18 and 26 disclosed in NPTL 1. Note that deblocking is performed for each boundary in the vertical direction and each boundary in the horizontal direction. The constituent elements denoted by odd reference numerals in FIG. 8 perform deblocking on the boundaries in the vertical direction, and the constituent elements denoted by even reference numerals perform deblocking on the boundaries in the horizontal direction. First, a transformation block boundary detection unit 31 detects boundaries in the vertical direction of transformation blocks based on the side information indicating the sizes of the transformation blocks. Next, a prediction block boundary detection unit 33 detects boundaries in the vertical direction of prediction blocks based on the side information indicating the sizes of the prediction blocks. Note that a transformation block is a block that relates to orthogonal transformation executed by the transformation/quantization unit 11, and a prediction block is a block in prediction processing performed by the inter prediction unit 15 or the intra prediction unit 16. Note that the boundaries of the transformation blocks and the prediction blocks will be simply referred to collectively as "boundaries" hereinafter.

A boundary strength determination unit 35 evaluates the boundary strength using three levels, namely 0, 1, and 2, based on the side information, or more specifically, whether intra prediction or inter prediction is used, whether or not the boundary is a boundary between transformation blocks and a non-zero orthogonal transformation coefficient exists, whether or not the difference between the motion vectors of two blocks on both sides of the boundary is greater than or equal to a threshold, and whether a motion compensation reference image of the two blocks on both sides of the boundary is different or the numbers of motion vectors of the two blocks on both sides of the boundary are different. Note that a boundary strength of 0 is the weakest, and a boundary strength of 2 is the strongest. Based on decision criteria that use the boundary strength of the boundary that is the processing target, the quantization parameters included in the side information, and the pixel values of the non-deblocked image, the filter deciding unit 37 decides whether or not a filter is to be used on the boundary that is the processing target, and if the filter is to be used, the filter deciding unit 37 determines whether to apply a weak filter or a strong filter. A filter unit 39 performs deblocking by applying a filter to a non-deblocked image in accordance with the deciding performed by the filter deciding unit 37.

The processing performed by the transformation block boundary detection unit 32, the prediction block boundary detection unit 34, the boundary strength determination unit 36, and the filter deciding unit 38 differs only in the direction of the target boundaries from the processing performed by the transformation block boundary detection unit 31, the prediction block boundary detection unit 33, the boundary strength determination unit 35, and the filter deciding unit 37, and repetitive description thereof is omitted. Also, in accordance with the deciding of the filter deciding unit 38, a filter unit 40 applies a filter to the filter target image, which is an image that is output by the filter unit 39 and is obtained by applying a filter to the boundaries in the vertical direction, and the filter unit 40 outputs a deblocked image.

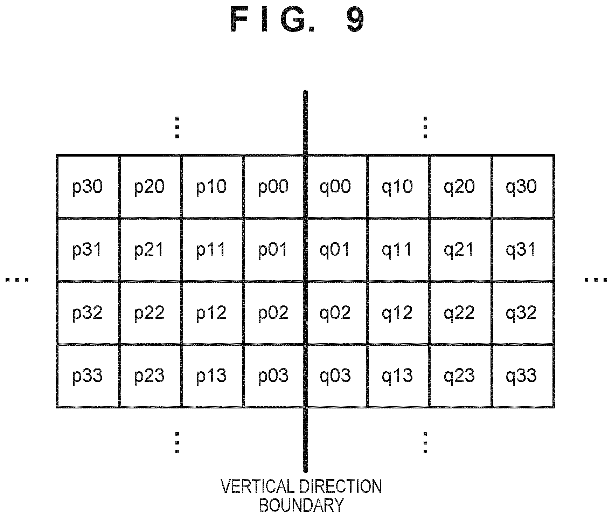

Fig. 9 shows a boundary in the vertical direction. Note that pxy and qxy (x and y are integers from 0 to 3) are pixels. In NPTL 1, the pixel values of a total of 16 pixels, namely px0, qx0, px3, and qx3 (here, x is an integer from 0 to 3) are used to decide the filter type. Note that filter processing is performed in units of a total of 32 pixels, namely pxy and qxy (x and y are integers from 0 to 3). In other words, in the case of a boundary in the vertical direction, it is decided whether or not the filter is to be applied in units of four pixels in the vertical direction, and if the filter is to be applied, the strength thereof is decided. Note that in the case of a weak filter, the values of the pixels p0y and q0y are changed through filter processing, and in the case of a strong filter, the values of the pixels p2y, p1y, p0y, q0y, q1y, and q2y are changed through filter processing. Note that in the case of a boundary in the horizontal direction, processing similar to that used in the case of the boundary in the vertical direction is used, with FIG. 9 rotated 90 degrees. In other words, in the case of a boundary in the horizontal direction, the relationship between the positions of the pixels used to decide on the filter type or the positions of the pixels with values that are to be changed by the filter and the boundary is similar to that in the case of a boundary in the vertical direction.

PTL 2 discloses a configuration in which the boundary strength is increased as the prediction block increases in size, in order to suppress block distortion. Also, NPTL 2 discloses performing encoding control such that a large-sized block is not likely to be selected, in order to suppress block distortion.

### CITATION LIST

### PATENT LITERATURE

PTL 1: Japanese Patent Laid-Open No. 2014-197847
PTL 2: Japanese Patent Laid-Open No. 2011-223302

### NON-PATENT LITERATURE

NPTL 1: ITU-T H.265 High Efficiency Video Coding
NPTL 2: JCTVC-L0232 AHG6: On deblocking filter and parameters signaling

### SUMMARY OF INVENTION

### TECHNICAL PROBLEM

PTL 2 takes only the prediction blocks into consideration, and block distortion occurs depending on the size of the transformation block. Also, in the configuration disclosed in NPTL 2, the encoding amount increases.

### SOLUTION TO PROBLEM

According to an aspect of the present invention, a moving image processing apparatus includes: detection means for detecting a boundary of blocks; determination means for determining a strength of the boundary detected by the detection means; and deciding means for deciding whether or not a filter is to be applied to the boundary based on the strength of the boundary determined by the determination means, wherein the determination means uses a size of a transformation block to determine the strength of the boundary.

Other features and advantages of the present invention will become apparent from the following description given with reference to the accompanying drawings. Note that in the accompanying drawings, identical or similar configurations are denoted by identical reference numerals.

### BRIEF DESCRIPTION OF DRAWINGS

FIG. 1 is a configuration diagram of a deblocking filter according to an embodiment.
FIG. 2 is a configuration diagram of the deblocking filter according to an embodiment.
FIG. 3 is a diagram showing filter coefficients of a strong filter.
FIG. 4 is a diagram showing filter coefficients according to an embodiment.
FIG. 5 is a diagram illustrating filter processing according to an embodiment.
FIG. 6 is a configuration diagram of an encoding apparatus according to an embodiment.
FIG. 7 is a configuration diagram of a decoding apparatus according to an embodiment.
FIG. 8 is a configuration diagram of a deblocking filter.
FIG. 9 is a diagram illustrating pixels used in filter determination in the case of a boundary in the vertical direction, and a filter target pixel.

### DESCRIPTION OF EMBODIMENTS

Hereinafter, exemplary embodiments of the present invention will be described with reference to the drawings. Note that the following embodiments are exemplary and the present invention is not limited to the content of the embodiments. Also, in the following drawings, constituent elements that are not needed in the description of the embodiments are omitted from the drawings.

### First Embodiment

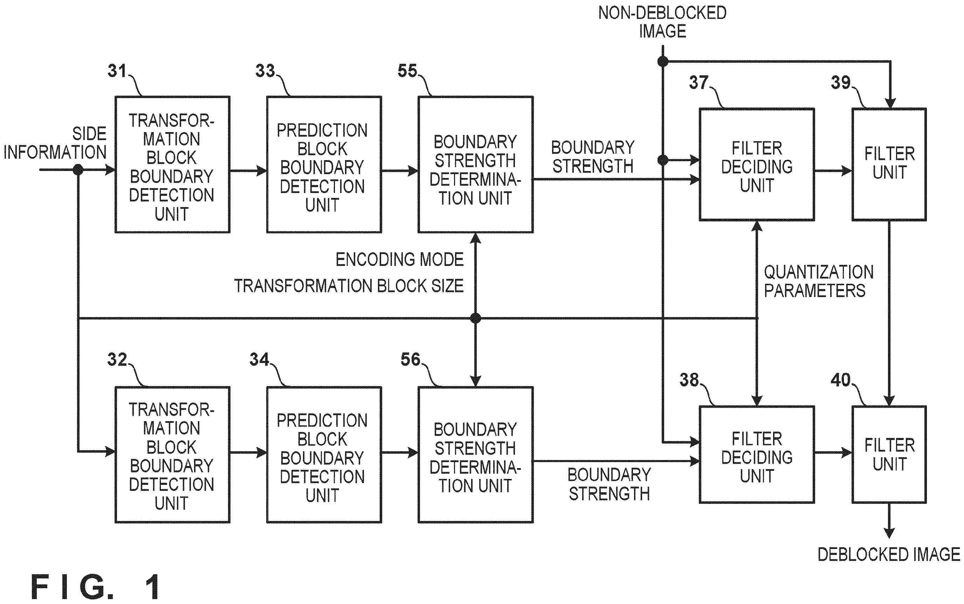

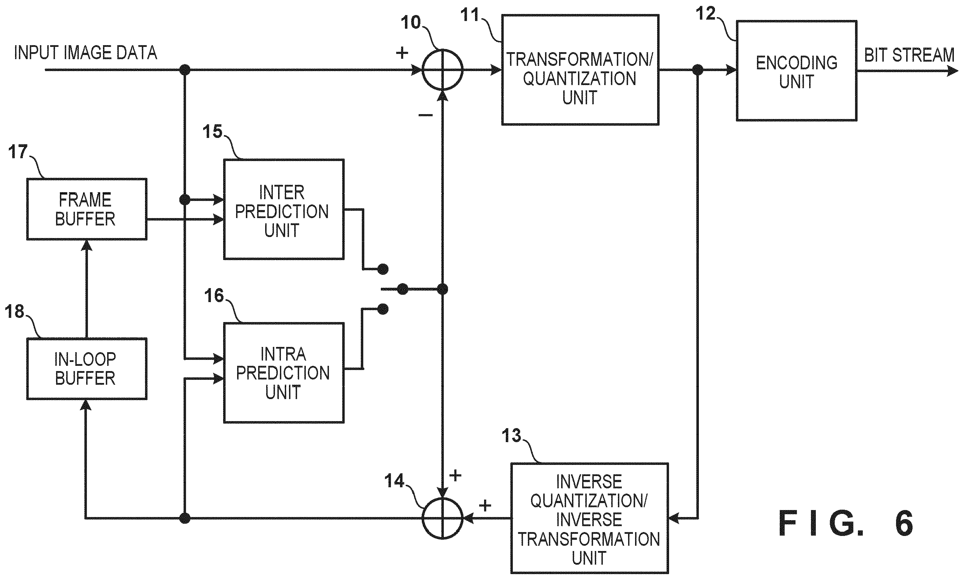

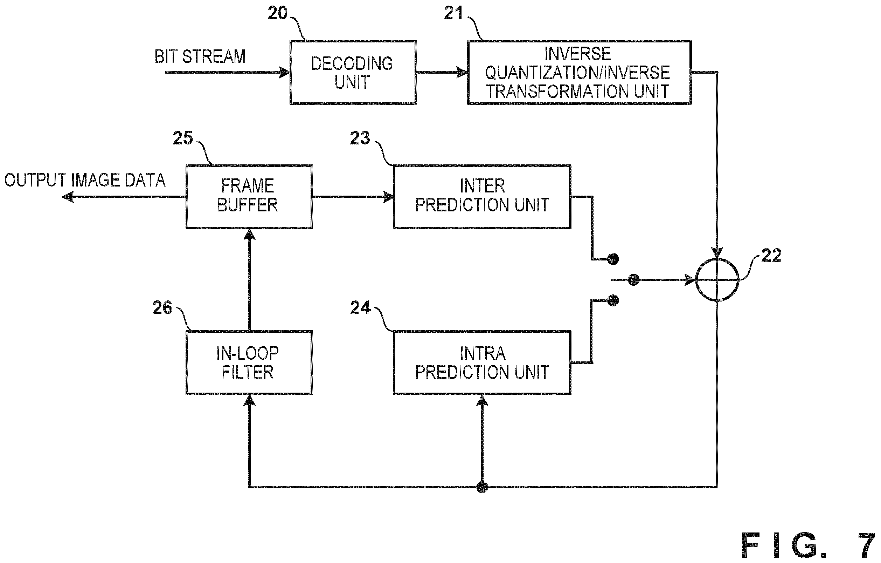

Basic configurations of an encoding apparatus and a decoding apparatus according to the present embodiment are the same as in FIGS. 6 and 7, and repetitive description thereof is omitted. Also, the configurations of the in-loop filters 18 and 26 of the encoding apparatus and the decoding apparatus according to the present embodiment are the same. Hereinafter, deblocking filters included in the in-loop filters 18 and 26 of the encoding apparatus and the decoding apparatus according to the present embodiment will be described, but no distinction is made between the encoding apparatus and the decoding apparatus and they are instead referred to collectively as a moving image processing apparatus. FIG. 1 shows a deblocking filter included in the in-loop filters 18 and 26. In the deblocking filter shown in FIG. 1, constituent elements that are similar to those of the deblocking filter shown in FIG. 8 are denoted by the same reference numerals, and repetitive description thereof is omitted. Also, although the deblocking filter according to the present embodiment also includes units for performing filter processing on boundaries in the vertical direction (odd reference numerals) and units for performing filter processing on boundaries in the horizontal direction (even reference numerals) similarly to the deblocking filter shown in FIG. 8, the content of the processing is similar aside from the directions of the boundaries, and therefore description will be given for only the boundaries in the vertical direction hereinafter.

In the present embodiment, a boundary strength determination unit 55 uses the conventional boundary strength determination criteria shown in FIG. 8 as well as the transformation block size in the boundary strength determination. First, the conventional boundary strength determination criteria will be described. If one block at the boundary in the vertical direction shown in FIG. 9 is to be subjected to intra prediction, a boundary strength determination unit 55 determines that the boundary strength is 2. Also, if the boundary is a boundary between transformation blocks and a non-zero orthogonal transformation coefficient exists, the boundary strength determination unit 55 determines that the boundary strength is 1. Also, if the absolute value of the difference between the motion vectors of two blocks on both sides of the boundary is one pixel or more, the boundary strength determination unit 55 determines that the boundary strength is 1. Also, if the motion

compensation reference images of two blocks on both sides of the boundary are different or the numbers of motion vectors of two blocks on both sides of the boundary are different, the boundary strength determination unit 55 determines that the boundary strength is 1. Also, if none of the above applies, the boundary strength determination unit 55 determines that the boundary strength is 0.

In the present embodiment, if the boundary in the vertical direction shown in FIG. 9 is a boundary between transformation blocks and the size in the vertical direction of at least one transformation block is greater than or equal to a first threshold, the boundary strength determination unit 55 adds 1 to the boundary strength determined using the above-described conventional determination criteria and outputs the resulting value as the final boundary strength. In other words, in the present embodiment, the boundary strength determination unit 55 outputs one value for the boundary strength, namely one of 0 to 3. For example, the first threshold can be 16 pixels, at which block distortion of a transformation block tends to be noticeable.

Based on the boundary strength of the boundary, the quantization parameters included in the side information, and the pixel values of the non-deblocked image, the filter deciding unit 37 decides whether or not a filter is to be applied to the boundary in accordance with the decision criteria for the filter, and if a filter is to be applied, the filter deciding unit 37 decides whether to apply a weak filter or a strong filter.

Here, with the decision criteria, the larger the value of the boundary strength is, the higher the probability of determining that a filter is to be applied is. More specifically, regarding the luminance values, when the boundary strength is 0, it is determined that no filter is to be applied. On the other hand, when the boundary strength is 1 or more, it is decided whether or not the filter is to be applied by comparing a value calculated based on the pixel values of a total of 12 pixels, namely px0, qx0, px3, and qx3 (here, x is an integer from 0 to 2) and a value obtained based on the average value of the quantization parameters of two blocks constituting the boundary. Also, regarding color difference values, when the boundary strength is 2 or more, it is determined that a filter is to be applied. In other words, with the decision criteria, the value of the strength of the boundary being greater than or equal to a threshold (1 for luminance values, 2 for color difference values) is a condition for applying a filter. Also, if the value of the strength of the boundary is greater than or equal to a threshold, and regarding the luminance values, if the value calculated based on the pixel values of a total of 12 pixels, namely px0, qx0, px3, and qx3 (here, x is an integer from 0 to 2), is less than a value obtained based on the average value of the quantization parameters of the two blocks that constitute the boundary, it is determined that a filter is to be applied. Note that regarding the color difference values, if the value of the strength of the boundary is greater than or equal to a threshold, it is determined that a filter is to be applied.

Also, with the decision criteria, the larger the boundary strength is, the greater the probability of deciding that the strong filter is to be applied is. Specifically, if the filter is to be applied to the luminance values, six values are calculated based on the pixel values of a total of 16 pixels, namely px0, qx0, px3, and qx3 (here, x is an integer from 0 to 3), and if all of the values satisfy predetermined criteria, it is decided that the strong filter is to be applied. Two of the predetermined criteria are satisfied if the difference between p00 and q00 and the difference between p03 and q03 are each less than a second threshold, but the second threshold is set based on the boundary strength. More specifically, an intermediate value is obtained based on the boundary strength. The intermediate value is set to a larger value the larger the boundary strength is. Then, the second threshold is obtained based on the intermediate value. Note that the relationship between the intermediate value and the second threshold is determined in advance. The relationship between the intermediate value and the second threshold is determined such that if the second threshold is a third value when the intermediate value is a first value and the second threshold is a fourth value when the intermediate value is a second value that is larger than the first value, the fourth value is a value that is greater than or equal to the third value. In other words, if the boundary strength changes from the first value to the greater second value, the second threshold changes from the third value to a value that is greater than or equal to the third value. Also, with the decision criteria, the absolute value of the difference between p00 and q00 and the absolute value of the difference between p03 and q03 each being smaller than the second threshold is one condition for selecting the strong filter. Accordingly, if the boundary strength increases, the probability that the strong filter will be applied increases. Note that one type of filter is used for the color difference values.

As described above, in the present embodiment, the sizes of the transformation blocks are used to determine the boundary strength. More specifically, prediction block boundaries and transformation block boundaries are detected, and the sizes of the transformation blocks are used to determine the strength of the boundary between the transformation blocks. At this time, if the size in the same direction as the boundary of at least one transformation block among the transformation blocks on both sides of the boundary is greater than or equal to the first threshold, it is determined that the strength of the boundary is higher than in the case where the size is less than the first threshold. For example, if the size in the same direction as the boundary of at least one transformation block among the transformation blocks on both sides of the boundary is greater than or equal to the first threshold, the strength of the boundary is increased by a predetermined value, for example, 1, compared to the case where the size is less than the first threshold. The filter deciding units 37 and 38 decide whether or not a filter is to be applied to the boundary using the decision criteria including the strength of the boundary, but as described above, the larger strength of the boundary is, the greater the probability that the filter will be applied to the boundary is. Accordingly, if the size of the transformation block is greater than or equal to the first threshold, it is possible to suppress a case in which the probability that the filter will be applied increases and filter distortion becomes noticeable. Also, since the case in which the size of the block increases is not suppressed, the encoding amount does not increase.

Furthermore, if a filter is to be applied to the boundary, the filter deciding units 37 and 38 decide on the filter that is to be applied to the boundary from among multiple filters with different strengths. Note that in the above-described embodiment, the multiple filters with different strengths were two types, namely a weak filter and a strong filter with a higher filter strength than the weak filter. However, it is also possible to use a configuration in which three or more filters with different strengths are used. Also, the filter deciding units 37 and 38 set the second threshold for deciding on the filter to be applied to the boundary based on the strength of the boundary. Here, in the decision criteria, the second threshold is larger the larger the boundary strength is, and the likelihood that the stronger filter will be selected increases the greater the second threshold is. Accordingly, if the size of the transformation block is greater than or equal to the first threshold, the probability that the strong filter will be applied increases and thus it is possible to suppress a case in which filter distortion becomes noticeable.

### Second Embodiment

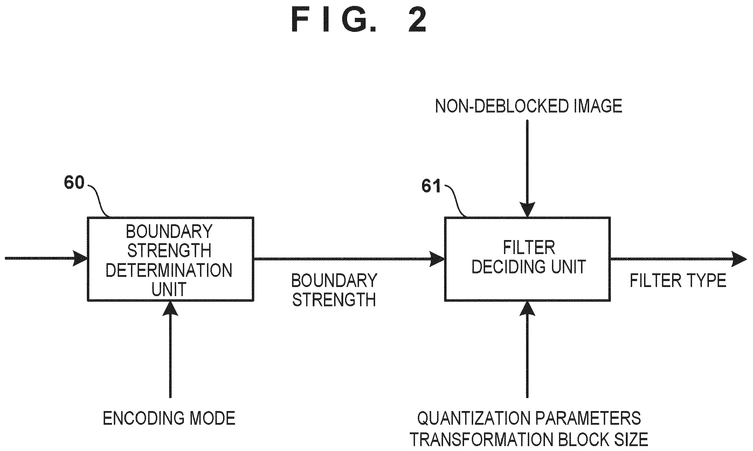

Next, a second embodiment will be described with a focus on differences from the first embodiment. In the present embodiment, the boundary strength determination unit 55 and the filter deciding unit 37 shown in FIG. 1, and the boundary strength determination unit 56 and filter deciding unit 38 are respectively replaced with a boundary strength determination unit 60 and a filter deciding unit 61 shown in FIG. 2. Note that the processing performed by the boundary strength determination unit 60 is similar to that performed by the boundary strength determination unit 35 shown in FIG. 8. In other words, the boundary strength determination unit 60 outputs the boundary strengths 0 to 2. In the present embodiment, if the boundary is a boundary between transformation blocks, the filter deciding unit 61 determines whether or not the block size in the corresponding direction (vertical or horizontal) is greater than or equal to a first threshold. Also, if the size is greater than or equal to the first threshold, it is decided that the strong filter is to be used. On the other hand, if the size is less than the first threshold, the conventional method is used to decide whether or not the filter is to be applied, and if it is to be applied, it is decided whether the strong filter or the weak filter is to be applied. Note that the first threshold can be 16 pixels, similarly to the first embodiment.

As described above, in the present embodiment, if the size of the transformation block on one side of the boundary is greater than or equal to the first threshold, the strong filter is always applied. Accordingly, even if the transformation block size is large, block distortion can be suppressed. Note that in the present embodiment as well, the filter can have three or more strengths. In this case, if the transformation block size is greater than or equal to the first threshold, the strongest filter is always applied.

### Third Embodiment

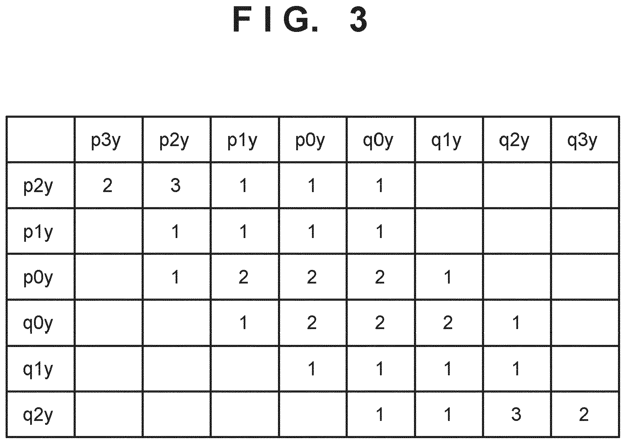

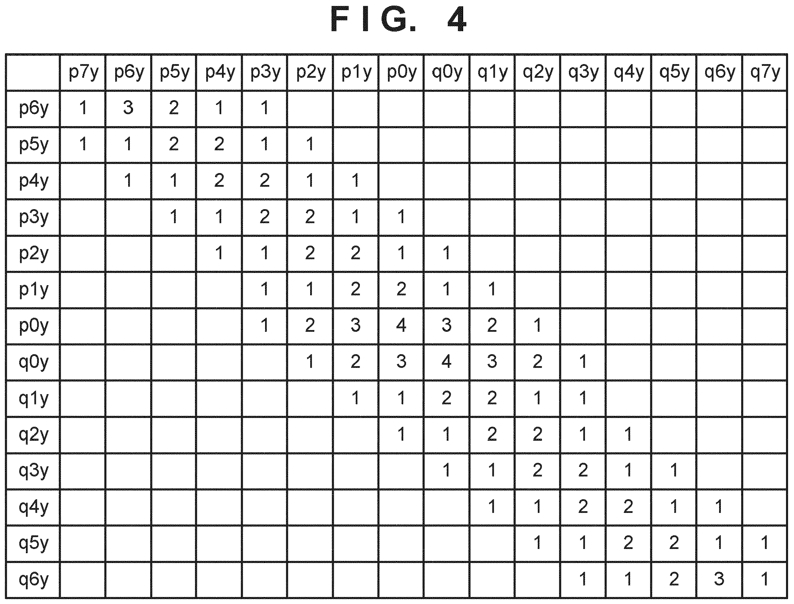

Next, a third embodiment will be described with a focus on differences from the second embodiment. The configuration of the present embodiment is similar to that of the second embodiment. However, in the second embodiment, if the boundary is a boundary between transformation blocks and the size thereof is greater than or equal to the first threshold, the strong filter was always applied. As described above, the strong filter is applied to the pixels pxy and qxy (here, x is 0 to 2 and y is 0 to 3) shown in FIG. 9.
In other words, filter processing is performed on pixels at a distance of three pixels or fewer away from the boundary. FIG. 3 shows filter coefficients at a time of applying the strong filter. For example, the pixels p2y are changed based on the pixel values of pixels p3y, p2y, p1y, p0y, and q0y. In the present embodiment, if the boundary is a boundary between transformation blocks and the size thereof is greater than or equal to a threshold, another type of filter with a greater distance than a normal strong filter from the boundary of the pixel range to which the filter is to be applied is used. For example, if the boundary is a boundary between transformation blocks and the size thereof is greater than or equal to a threshold, the application range is increased to seven pixels from the boundary. FIG. 4 shows an example of filter coefficients of the other type of filter, and in FIG. 4, a range of seven pixels from the boundary is set as the filter target.

As described above, in the present embodiment, if the transformation block size is greater than or equal to the first threshold, the pixel range for filter application based on the boundary is made larger than that of a normal strong filter. With this configuration, even if the transformation block size is large, block distortion can be suppressed.

### Fourth Embodiment

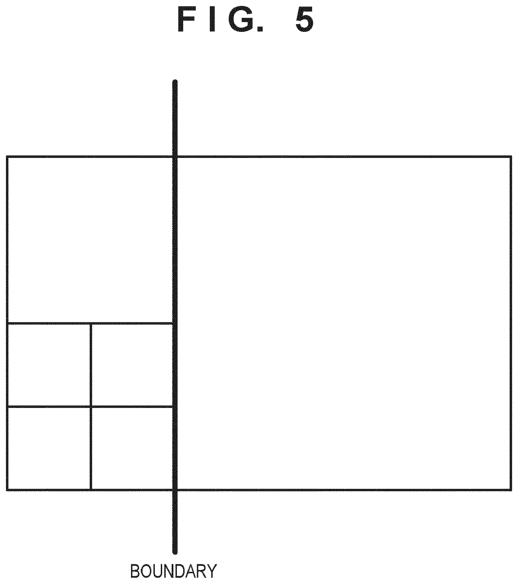

In the first to third embodiments, filters were similarly applied to both sides of the boundary. In the present embodiment, if the size of one transformation block at a boundary is greater than or equal to the first threshold, or for example, 16 pixels or more, a filter is decided on for the one transformation block in accordance with the processing of one of the first to third embodiments, and a filter decided on using the conventional method is applied to the other block. For example, as shown in FIG. 5, the size of the transformation block on the right side of the boundary that is the processing target is greater than or equal to the first threshold, and the sizes of the transformation blocks on the left side of the boundary are each less than the first threshold. If the method of the first embodiment is applied, the boundary strength determination unit 55 decides on a first strength for deciding whether or not a filter is to be applied and the type of filter for the pixels in the transformation blocks on the left side of the boundary, and decides on a second strength for deciding whether or not a filter is to be applied and the type of filter for the pixels in the transformation block on the right side of the boundary. Note that with the first embodiment, the second strength is a value obtained by adding 1 to the first strength. Also, if the method of the second embodiment is to be applied, the filter deciding unit 61 decides whether or not a filter is to be applied and the type of filter for the pixels of the transformation blocks on the left side of the boundary in accordance with the method of the conventional technique, and decides that a strong filter is to be applied to the pixels of the transformation block on the right side of the boundary. Furthermore, if the method of the third embodiment is to be applied, the filter deciding unit 61 decides whether or not a filter is to be applied and the type of filter for the pixels of the transformation blocks on the left side of the boundary in accordance with the method of the conventional technique, and decides that a filter with an expanded distance range from the boundary is to be applied to the pixels of the transformation block on the right side of the boundary.

Accordingly, the filter strength to be applied and the range thereof can be limited to the transformation block that is greater than or equal to the first threshold, and an increase in the filter processing load can be suppressed.

Note that the processing apparatus according to the present invention, or in other words, the encoding apparatus or decoding apparatus, can be realized using programs that cause a computer to operate as the above-described processing apparatus. These computer programs can be stored in a computer-readable storage medium or can be distributed via a network.

The present invention is not limited to the above-described embodiments, and various changes and modifications are possible without departing from the spirit and scope of the present invention. Accordingly, the following claims are appended in order to make the scope of the present invention public.

The present application claims priority based on Japanese Patent Application No. 2015-194343, originally filed on September 30, 2015, the content of which is incorporated herein in its entirety.
Aspects and features of the present disclosure are set out in the following numbered clauses which contain the subject-matter of the claims of the parent European patent application as originally filed:
1. A moving image processing apparatus, comprising:
   detection means for detecting a boundary of blocks;
   determination means for determining a strength of the boundary detected by the detection means; and
   deciding means for deciding whether or not a filter is to be applied to the boundary based on the strength of the boundary determined by the determination means,
   wherein the determination means uses a size of a transformation block to determine the strength of the boundary.
2. The processing apparatus according to clause 1,
   wherein the detection means detects a boundary between prediction blocks and a boundary between transformation blocks, and
   the determination means uses sizes of the transformation blocks to determine the strength of the boundary between the transformation blocks.
3. The processing apparatus according to clause 2,
   wherein if the size in the same direction as the boundary of at least one transformation block among the transformation blocks on both sides of the boundary is greater than or equal to a first threshold, the determination means determines that the strength of the boundary is higher compared to a case where the size is less than the first threshold.
4. The processing apparatus according to clause 3,
   wherein if the size in the same direction as the boundary of one transformation block among the transformation blocks on both sides of the boundary is greater than or equal to the first threshold and the size in the same direction as the boundary of another transformation block is less than the first threshold, the determination means determines a strength to be used for the deciding means to decide on a filter to be applied to pixels in the one transformation block and a strength to be used for the deciding means to decide on a filter to be applied to pixels in the other transformation block.
5. The processing apparatus according to any one of clauses 1 to 4,
   wherein the deciding means decides whether or not a filter is to be applied to the boundary using decision criteria including the strength of the boundary, and
   in the decision criteria, the strength of the boundary being greater than a predetermined value is one condition for applying a filter to the boundary.
6. The processing apparatus according to clause 5,
   wherein if a filter is to be applied to the boundary, the deciding means decides on the filter that is to be applied to the boundary from among a plurality of filters with different strengths, and
   in the decision criteria, a second threshold for deciding on the filter to be applied to the boundary is decided on based on the strength of the boundary.
7. The processing apparatus according to clause 6,
   wherein if a filter is to be applied to the boundary, the deciding means decides on the filter that is to be applied to the boundary from among a filter with a first strength and a filter with a second strength that is stronger than the filter with the first strength,
   in the decision criteria, the second threshold is set based on a relationship between the strength of the boundary and the second threshold, and an absolute value of a difference between a predetermined pixel of one block at the boundary and a predetermined pixel of another block at the boundary being smaller than the second threshold is one condition for selecting the filter with the second strength, and
   the relationship between the strength of the boundary and the second threshold value is a relationship in which if the strength of the boundary changes from a first value to a second value that is greater than the first value, the second threshold changes from a third value to a value that is greater than or equal to the third value.
8. A moving image processing apparatus, comprising:
   detection means for detecting a boundary of blocks; and
   deciding means for deciding whether or not a filter is to be applied to the boundary detected by the detection means,
   if the boundary is a boundary between transformation blocks and a size in a direction of the boundary of at least one transformation block among the transformation blocks on both sides of the boundary is greater than or equal to a first threshold, the deciding means decides that a filter is to be applied to the boundary.
9. The processing apparatus according to clause 8,
   wherein if a filter is to be applied to the boundary, the deciding means decides on the filter that is to be applied to the boundary from among a plurality of filters with different strengths, and
   if the boundary is a boundary between transformation blocks and a size in the same direction as the boundary of at least one transformation block among the transformation blocks on both sides of the boundary is greater than or equal to the first threshold, the deciding means decides that a filter with the highest strength among the plurality of filters with different strengths is to be applied to the boundary.
10. The processing apparatus according to clause 8,
   wherein if the boundary is a boundary between transformation blocks and a size in the same direction as the boundary of at least one transformation block among the transformation blocks on both sides of the boundary is greater than or equal to a first threshold, the deciding means increases the distance from the boundary of a pixel region to which the filter to be applied to the boundary is to be applied, compared to a case where the size is less than the first threshold.
11. The processing apparatus according to clause 9 or 10,
   wherein if the boundary is a boundary between transformation blocks, the size in the same direction as the boundary of one transformation block among the transformation blocks on both sides of the boundary is greater than or equal to the first threshold, and the size in the same direction as the boundary of another transformation block is less than the first threshold, then the deciding means decides on filters such that a filter to be applied to pixels in the one transformation block and a filter to be applied to pixels in the other transformation block are different.
12. A moving image processing method for a processing apparatus, comprising:
   detecting a boundary of blocks;
   determining a strength of the boundary detected in the detecting; and
   deciding whether or not a filter is to be applied to the boundary based on the strength of the boundary determined in the determining,
   wherein in the determining, a size of a transformation block is used to determine the strength of the boundary.
13. A moving image processing method for a processing apparatus, comprising:
   detecting a boundary of blocks; and
   deciding whether or not a filter is to be applied to the boundary detected in the detecting,
   wherein in the deciding, if the boundary is a boundary between transformation blocks and a size in the same direction as the boundary of at least one transformation block among the transformation blocks on both sides of the boundary is greater than or equal to a first threshold, it is decided that a filter is to be applied to the boundary.
14. A computer-readable storage medium including a program for causing a computer to operate as the processing apparatus according to any one of clauses 1 to 11.

## Claims

1. A moving image processing apparatus, comprising:
detection means (31, 32, 33, 34) for detecting a boundary between two adjacent transformation blocks; and
deciding means (37, 38) for deciding whether or not a deblocking filter is to be applied to decoded pixels of each of the two adjacent transformation blocks along the boundary detected by the detection means (31, 32, 33, 34),
**characterized in that**, if a first size of a first transformation block of the two adjacent transformation blocks or a second size of a second transformation block of the two adjacent transformation blocks is greater than or equal to a first threshold, the deciding means (37, 38) is configured to decide that a strongest filter among a plurality of filters is to be applied to the decoded pixels of each of the two adjacent transformation blocks along the boundary as the deblocking filter,
wherein if the first size or the second size is greater than or equal to the first threshold, the deciding means (37, 38) is configured to increase a distance from the boundary of the decoded pixels to which the deblocking filter is to be applied, compared to a case where the first size and the second size are less than the first threshold.

2. The processing apparatus according to claim 1, further comprising determination means (55, 56) for determining a strength of the boundary detected by the detection means (31, 32, 33, 34),
wherein if the first size is greater than or equal to the first threshold, and the second size is less than the first threshold, the deciding means (37, 38) is configured to decide that the strongest filter is to be applied to the decoded pixels in the first transformation block, and to decide the deblocking filter to be applied to the decoded pixels in the second transformation block based on the strength of the boundary determined by the determination means (55, 56) .

3. A moving image processing method for a processing apparatus, comprising:
detecting a boundary between two adjacent transformation blocks; and
deciding whether or not a deblocking filter is to be applied to decoded pixels of each of the two adjacent transformation blocks along the boundary detected in the detecting,
**characterized in that**, in the deciding, if a first size of a first transformation block of the two adjacent transformation blocks or a second size of a second transformation block of the two adjacent transformation blocks is greater than or equal to a first threshold, it is decided that a strongest filter among a plurality of filters is to be applied to the decoded pixels of each of the two adjacent transformation blocks along the boundary as the deblocking filter,
wherein if the first size or the second size is greater than or equal to the first threshold, a distance from the boundary of the decoded pixels to which the deblocking filter is to be applied is increased compared to a case where the first size and the second size are less than the first threshold.

4. A computer-readable storage medium including a program for causing a computer to operate as the processing apparatus according to any one of claims 1 or 2.
